(19) Europäisches Patentamt
European Patent Office
Office européen des brevets

(11) **EP 3 517 275 A1**

(12) **EUROPEAN PATENT APPLICATION**
published in accordance with Art. 153(4) EPC

(43) Date of publication:
**31.07.2019 Bulletin 2019/31**

(51) Int Cl.:
***B29C 64/386*** (2017.01)   ***B33Y 50/00*** (2015.01)

(21) Application number: **17853231.3**

(22) Date of filing: **26.09.2017**

(86) International application number:
**PCT/JP2017/034744**

(87) International publication number:
**WO 2018/056464 (29.03.2018 Gazette 2018/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **26.09.2016   JP 2016187194**

(71) Applicant: **The University of Tokyo
Tokyo 113-8654 (JP)**

(72) Inventor: **YASUKOCHI, Hiroyuki
Tokyo 113-8654 (JP)**

(74) Representative: **Fleuchaus, Michael A.
Fleuchaus & Gallo Partnerschaft mbB
Patent- und Rechtsanwälte
Steinerstrasse 15/A
81369 München (DE)**

(54) **INFORMATION PROCESSING DEVICE, INFORMATION PROCESSING METHOD, AND PROGRAM FOR PROCESSING STEREOLITHOGRAPHIC DATA**

(57)     To provide an information processing device, an information processing method, and a program which can generate photo-fabrication data for irradiation with suitable light intensity.

Means for showing a cut section of a three-dimensional fabricated object and for generating a tomographic image having a structure region of the three-dimensional fabricated object as a first pixel value and a non-structure region as a second pixel value, means for setting a first peripheral region for a pixel to be processed having the first pixel value in the tomographic image, first calculating means for calculating a pixel value so that an exposure amount increases in accordance with the number of the pixels when the number of pixels having the second pixel value in the region to be processed is a first threshold value or more and for calculating a pixel value so that the exposure amount is constant when the number of the pixels is less than the first threshold value, and output means for outputting photo-fabrication data generated on the basis of the pixel value calculated for each of the pixels by the first calculating means so that a photo-fabrication device generates the three-dimensional fabricated object are provided.

FIG. 10

## Description

Technical Field

Some aspects according to the present invention relate to an information processing device for processing photo-fabrication data for photo fabrication, for example, an information processing method, and a program.

Background Art

A photo-fabrication art by a so-called photo-fabrication device or the like for generating a fabricated object by irradiating a liquid photo-curing resin or the like with light, for example, has gradually spread. The photo-fabrication device finally generates a cubic three-dimensional fabricated object by repeating an operation of irradiating a liquid resin before being cured with light for several layers so that the resin is cured into a shape corresponding to a section of a fabrication target, for example (Patent Literature 1, for example).

Citation List

Patent Literature

Patent Literature 1: Japanese Patent Laid-Open No. 2016-117273

Summary of Invention

Technical Problem

Here, when the resin is irradiated with light, light intensity is preferably made different between a profile portion and an inside. That is because, since overlapping of light from adjacent portions is smaller on the profile portion than on the inside, if the profile portion is irradiated with the light with the same intensity as that on the inside, the profile portion is not cured sufficiently in some cases. On the other hand, if the inside is exposed to the light with the intensity on the profile, even outside of an original outer shape of the resin can be cured by leaked light in some cases. Moreover, particularly if the profile portion to be an outer shape is not cured sufficiently, delamination occurs and as a result, the fabrication can fail in some cases.

Thus, intensity for exposing the resin needs to be adjusted as appropriate in accordance with a position of an irradiation target, but such intensity adjustment has not been easy.

Some aspects of the present invention were made in view of the aforementioned problems and have an object to provide an information processing device which can generate photo-fabrication data for irradiation with suitable light intensity, an information processing method, and a program.

Solution to Problem

An information processing device according to an aspect of the present invention includes means for showing a cut section of a three-dimensional fabricated object and for generating a tomographic image having a structure region of the three-dimensional fabricated object as a first pixel value and a non-structure region as a second pixel value, means for setting a first peripheral region for a pixel to be processed having the first pixel value in the tomographic image, first calculating means for calculating a pixel value so that an exposure amount increases in accordance with the number of the pixels when the number of pixels having the second pixel value in the region to be processed is a first threshold value or more and for calculating a pixel value so that the exposure amount is constant when the number of the pixels is less than the first threshold value, and output means for outputting photo-fabrication data generated on the basis of the pixel value calculated for each of the pixels by the first calculating means so that a photo-fabrication device generates the three-dimensional fabricated object.

In an information processing method according to an aspect of the present invention, an information processing device executes a step of showing a cut section of a three-dimensional fabricated object and of generating a tomographic image having a structure region of the three-dimensional fabricated object as a first pixel value and a non-structure region as a second pixel value, a step of setting a first peripheral region for a pixel to be processed having the first pixel value in the tomographic image, a step of calculating a pixel value so that an exposure amount increases in accordance with the number of the pixels when the number of pixels having the second pixel value in the region to be processed is a first threshold value or more and for calculating a pixel value so that the exposure amount is constant when the number of the pixels is less than the first threshold value, and a step of outputting photo-fabrication data generated on the basis of the pixel value calculated for each of the pixels so that a photo-fabrication device generates the three-dimensional fabricated object.

A program according to an aspect of the present invention causes a computer to execute processing of showing a cut section of a three-dimensional fabricated object and of generating a tomographic image having a structure region of the three-dimensional fabricated object as a first pixel value and a non-structure region as a second pixel value, processing of setting a first peripheral region for a pixel to be processed having the first pixel value in the tomographic image, processing of calculating a pixel value so that an exposure amount increases in accordance with the number of the pixels when the number of pixels having the second pixel value in the region to be processed is a first threshold value or more and for calculating a pixel value so that the exposure amount is constant when the number of the pixels is less than the first threshold value, and processing of outputting photo-fabrication data generated on the basis of the pixel value calculated for each of the pixels so that a photo-fabrication device generates the three-dimensional fabricated object.

In the present invention, a "portion", "means", a "device", and a "system" do not simply mean physical means but include functions of the "portion", the "means", the "device", and the "system" realized by software. Moreover, one function of the "portion", the "means", the "device", or the "system" may be realized by two or more units of physical means or devices, or the function of two or more "portions", "means", "devices", and the "systems" may be realized by one physical means or device.

Brief Description of Drawings

Figure 1 is a diagram for explaining a configuration example of a photo-fabrication system.
Figure 2 is a diagram illustrating a model of a fabrication target.
Figure 3 is a diagram illustrating a specific example of tomographic image data generated from the model in Figure. 2.
Figure 4 is a diagram illustrating an example of a peripheral region of a pixel to be processed.
Figure 5 is a diagram illustrating an example of the peripheral region of the pixel to be processed.
Figure 6 is a diagram illustrating an example of the peripheral region of the pixel to be processed.
Figure 7 is a diagram illustrating an example of the peripheral region of the pixel to be processed.
Figure 8 is a diagram illustrating a specific example of a relationship between the number of dark pixels in the peripheral region of the pixel to be processed and luminescence amount.
Figure 9 is a diagram illustrating a specific example of print data.
Figure 10 is a block diagram illustrating functional configuration of an information processing device according to an embodiment.
Figure 11 is a flowchart illustrating a flow of processing of the information processing device illustrated in Figure 10.
Figure 12 is a block diagram illustrating a specific example of hardware configuration which can implement the information processing device illustrated in Figure 10.

Description of Embodiments

Hereinafter, an embodiment of the present invention will be described by referring to the attached drawings. However, the embodiment described below is only exemplification and is not intended to exclude various modifications or application of arts not explicitly shown below. That is, the present invention can be implemented with various modifications within a range not departing from the gist thereof. Moreover, in the description of the drawings below, the same or similar portions are shown with the same or similar reference numerals. The drawings are schematic and do not necessarily match actual dimensions, ratios and the like. Mutual dimensional relationships or ratios can be different among drawings in some cases.

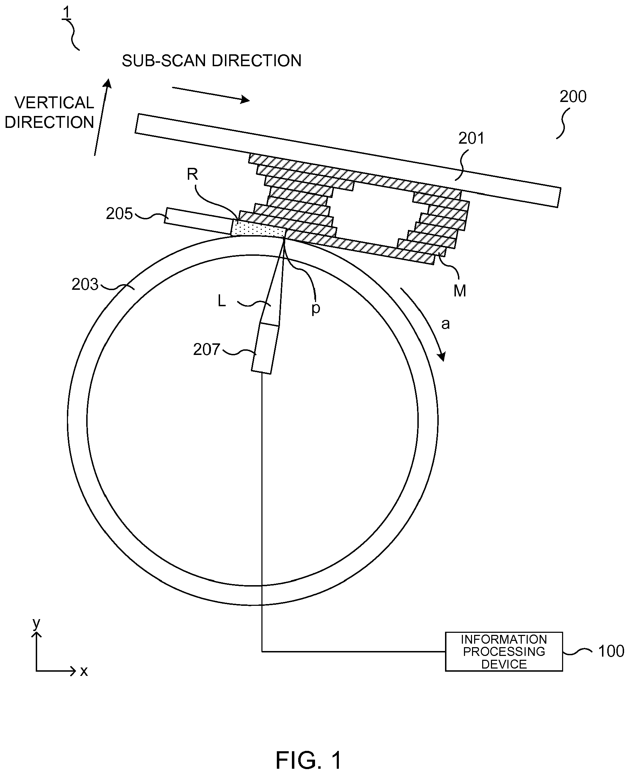

Figures 1 to 12 are diagrams for explaining the embodiment. The embodiment will be described along the following flow by referring to these drawings. First, outlines and the like of processing by an information processing device according to the embodiment will be described in "1". Subsequently, functional configuration of the information processing device will be described in "2", and then, a flow of processing of the information processing device will be described in "3". In "4", a specific example of hardware configuration which can realize the information processing device will be described. Lastly, in "5" and after, an effect according to the embodiment and the like will be described.

(1. Outline)

(1.1 Outline of photo-fabrication method)

In a device referred to as a so-called photo-fabrication device, an operation of irradiating a photo-curing liquid resin or powder with light into a shape corresponding to a section of a fabrication target so as to cure the resin is repeated for several layers, whereby a cubic three-dimensional fabricated object is generated at last. In such a device, a portion where a section of structural data of the fabrication target is present is irradiated with light, while a portion without it is not exposed.

When the resin is irradiated with light, irradiation intensity of light is preferably changed in accordance with a position rather than light irradiation simply in two stages, that is, a sectional portion specified by the structural data is irradiated with light uniformly, while the other portions are not irradiated with light. Particularly, the light intensity is preferably made different between the profile portion and the inside. That is because, since overlapping of the light from the adjacent portions is smaller on the profile portion than on the inside, if the profile portion is irradiated with the light with the same intensity as that on the inside, the profile portion is not cured sufficiently in some cases. On the other hand, if the inside is exposed to the light with the intensity on the profile, even outside of an original outer shape of the resin can be cured by light leaking from the irradiated portion to the periphery in some cases. Moreover, particularly if the profile portion to be an outer shape is not cured sufficiently, delamination occurs and as a result, the fabrication can fail in some cases.

Thus, in the device according to this embodiment, photo-fabrication data (print data for control) for suitably adjusting irradiation intensity of the light is generated. The photo-fabrication device can suitably generate a fabricated object by projecting the light with intensity based on the photo-fabrication data.

The photo-fabrication device can generate a fabricated object by various methods such as a case where a powder resin is a target or a case where a liquid resin is a target. Moreover, even if the liquid resin is a target, there can be a free liquid-level photo-fabrication method of irradiating a photo-curing resin collecting in a water tank with a laser beam from an upper surface side, a conventional regulated liquid-level method of irradiating a photo-curing resin collecting in a water tank with the laser beam from a lower surface side and the like. The generation method of photo-fabrication data described below is effective for fabrication of any of the photo-fabrication device, but here, a one-dimensional regulated liquid-level method will be described by referring to Figure 1.

Figure 1 is a diagram schematically expressing a part of a configuration example of a photo-fabrication system 1 in which photo fabrication is performed by controlling a photo-fabrication device 200 for fabrication by using the one-dimensional regulated liquid-level method from the information processing device 100. In the example in Figure 1, the photo-fabrication system 1 includes an information processing device 100 and the photo-fabrication device 200.

The information processing device 100 can be realized as a computer such as a personal computer, for example. In the example in Figure 1, the information processing device 100 is illustrated separately from the photo-fabrication device 200, but this configuration is not limiting, and the photo-fabrication device 200 may include the function of the information processing device 100, for example.

The information processing device 100 has structural data related to the three-dimensional structure of the fabricated object to be fabricated and generates print data corresponding to control information (corresponding to an instructed voltage or laser driving current supplied to a laser irradiating unit 207, for example) relating to with what intensity a laser beam L should be actually projected by the photo-fabrication device 200 on the basis of the structural data.

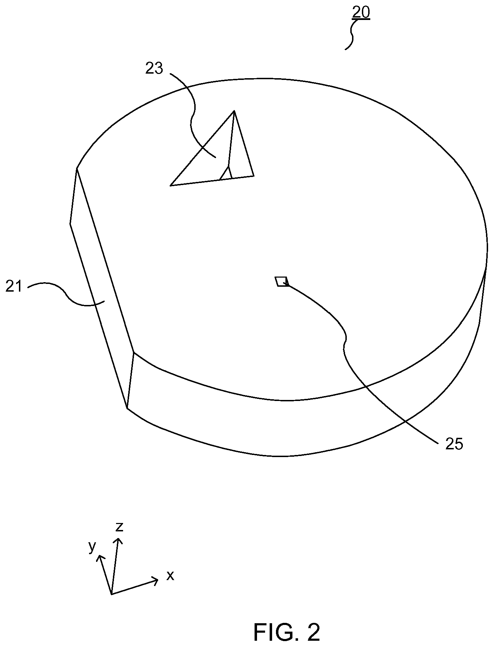

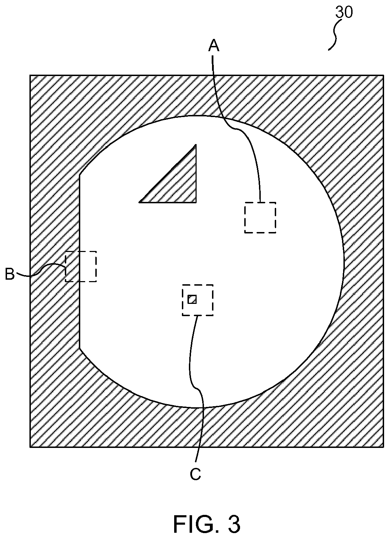

Here, the photo-fabrication device 200 generates a fabricated object by laminating a resin forming film M of 40 $\mu$m or the like, for example. Thus, the information processing device 100 generates tomographic image data obtained by dividing the fabricated object into each thickness (40 $\mu$m, for example) of the resin forming film M from the structural data. In the case of generation of the fabricated object illustrated as a model 20 in Figure 2, for example, the tomographic image data 30 illustrated in Figure 3 is generated for each layer.

An outer shape of the model 20 of the fabricated object illustrated in Figure 2 has a shape of a column in which circles are laminated in a z-axis direction cut off on an end portion 21 in an x-axis negative direction. A hole portion 23 having a shape cut out with a trigonal pyramid and a hole portion 25 having a shape cut out with a square column are formed at a center part.

The pixels constituting the tomographic image data 30 generated by the information processing device 100 correspond to a position irradiated with the laser beam L. In the example described here, a size of one pixel can be 10 $\mu$m x 10 $\mu$m. Moreover, a pixel value of each pixel corresponds to irradiation intensity (energy density) of the laser beam L and can be expressed by a monochromatic binary value. A pixel value at a position constituting a part of the fabricated object of a generation target (constituting a part of the fabricated object which is a generation target) which should be irradiated with the laser beam L is white, and a pixel value at a position not constituting the fabricated object, that is, not irradiated with the laser beam L is black.

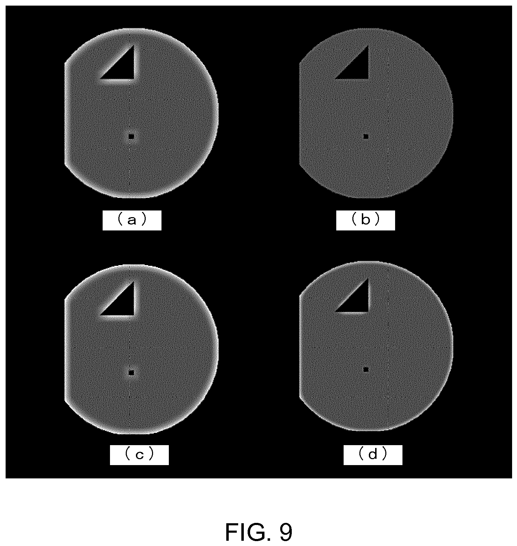

The information processing device 100 according to this embodiment generates print data corrected so that the irradiation intensity of the laser beam L is an appropriate value with respect to the tomographic image data 30 which is the monochromatic binary bitmap, that is, print data in which the pixel value of each pixel of the tomographic image data 30 is adjusted. The print data may be 8-bit gray-scale image data corresponding to the light irradiation energy density on an exposed surface, for example. A specific example of the print data generated from the tomographic image data 30 illustrated in Figure 3 will be illustrated in Figure 9 which will be described later in detail. Moreover, a method of generating the print data which is the 8-bit gray-scale image data from the monochromatic binary tomographic image data 30 will be described later in "1.2".

The information processing device 100 outputs a control signal for controlling the intensity of the laser beam L to the photo-fabrication device 200 on the basis of the generated print data.

The photo-fabrication device 200 includes a substrate 201, a regulated liquid-level glass 203, a resin nozzle 205, and the laser irradiating unit 207.

The substrate 201 is a base to which a curing resin which will be a fabricated object is fixed. The substrate 201 is moved as appropriate in a sub-scanning direction and a perpendicular direction thereof in Figure 1. More specifically, during formation of the resin forming film M, the substrate 201 is gradually moved to the right side in the figure (a positive direction in the x-axis). As will be described later, since the laser beam L is projected in one row by a polygon mirror scanning in a depth direction of the figure, when the irradiation of the one row is finished, the substrate 201 only needs to be moved to the right by 10 $\mu$m, for example. By repeating such processing, raster scanning with a line pitch of 10 $\mu$m, for example, is realized. When the irradiation with the laser beam L for generating one layer of the resin forming film M is finished, the substrate 201 raises the position in the vertical direction, and the substrate 201 is moved to an initial position on the left (the negative direction of the x-axis) on the figure. A lamination pitch of the resin forming film M can be 40 $\mu$m, for example.

Note that the substrate 201 is slightly inclined to a lower right direction with respect to a horizontal direction (x-axis direction) in the figure. That is because a resin R flowing out of the resin nozzle 205 is made to move smoothly along a rotation direction a of the regulated liquid-level glass 203.

The regulated liquid-level glass 203 is a cylindrical member made of a transparent member such as glass. The regulated liquid-level glass 203 is rotated toward the rotation direction a which is on a side opposite to the resin nozzle 205 when seen from a laser irradiation position p. As described above, the substrate 201 is moved (sub-scanning) from the left to the right until one layer of the resin forming film M is formed. The rotation of the regulated liquid-level glass 203 is preferably made to correspond to movement of the substrate 201. Since an interval between the substrate 201 and the regulated liquid-level glass 203 is enlarged as the sub-scanning of the substrate 201 advances, the resin forming film M is naturally peeled off the regulated liquid-level glass 203.

The resin nozzle 205 is a nozzle for causing the liquid resin R to flow onto the regulated liquid-level glass 203. For the liquid resin R, an acrylic photo-curing resin of a radical polymerization type can be used, for example. The liquid resin R flowing out of the resin nozzle 205 is trapped by a gap formed between the regulated liquid-level glass 203 and the resin forming film M due to capillarity phenomenon. The trapped liquid resin R is cured by being irradiated with the laser beam L from the laser irradiating unit 207 and becomes a part of the resin forming film M.

The laser irradiating unit 207 is a member for irradiating the liquid resin R with the laser beam L through the transparent regulated liquid-level glass 203. A laser diode with a wavelength of 405 nm, for example, can be used for a light source of the laser irradiating unit 207. With regard to the energy density of light irradiation may be based on 0.06 mJ/mm$^2$, for example. When the laser beam L with the energy density is projected to the acrylic photo-curing resin of the radical polymerization type, a curing depth is approximately 100 $\mu$m.

In this embodiment, the laser irradiating unit 207 performs main-scanning with the laser beam L in a depth direction in the figure. Since the laser irradiating unit 207 performs the main scanning in the depth direction in the figure and the substrate 201 is moved in the sub-scanning direction, the resin forming film M is gradually formed by raster scanning. The main scanning can be performed by a polygon mirror, for example. The laser beam L projected from the laser diode which is a light source is projected to the polygon mirror, and by rotating an angle of the polygon mirror little by little, an irradiation position of the laser beam L in the depth direction in the figure can be changed.

As described above, the generation method of the print data according to this embodiment is not limited to the photo-fabrication device 200 which performs fabrication by raster scanning by using the one-dimensional regulated liquid-level method. The method can be applied to a projection-type photo-fabrication device which exposes the liquid resin R in a planar state, for example.

(1.2 Generation method of print data)

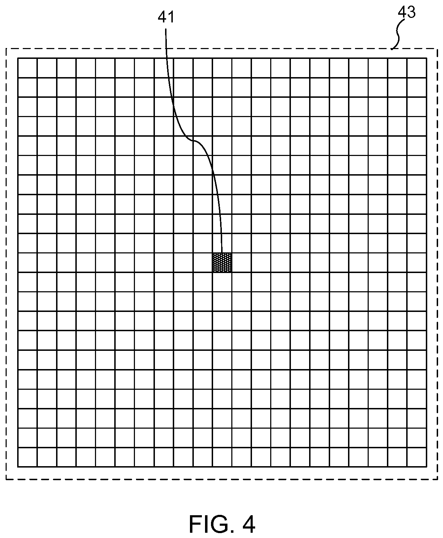

Subsequently, the generation method of the print data by the information processing device 100 according to this embodiment will be described by referring to Figures 4 to 9.

When structural data indicating a three-dimensional structure of a fabricated object which is a generation target is input, for example, the information processing device 100 generates the model 20 of the cubic fabricated object whose specific example is illustrated in Figure 2 and then, generates tomographic image data 30 obtained by cutting it off in the z-axis direction for each thickness of the resin forming film M on a xy plane whose specific example is illustrated in Figure 3. That is, the tomographic image data 30 corresponds to an image of a cut section of the model 20.

As described above, in order to perform precise and reliable fabrication, an appropriate light amount needs to be set for each position corresponding to a pixel of the tomographic image data 30. Thus, the information processing device 100 calculates an optimal light amount for a pixel to be processed on the basis of information on whether each pixel in a peripheral region of the pixel to be processed which is an exposure target is a pixel to be exposed (hereinafter referred to as a bright pixel) or a pixel not to be exposed (hereinafter referred to as a dark pixel) in the tomographic image data 30.

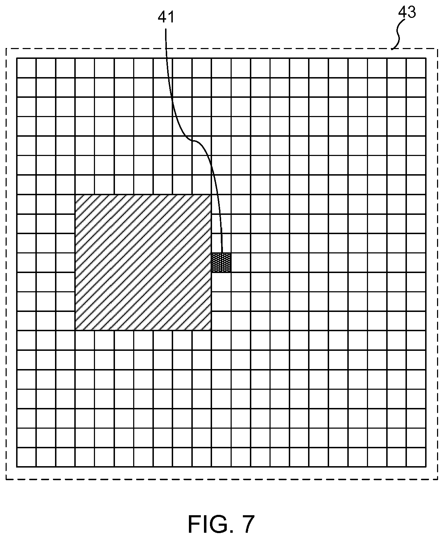

First, the information processing device 100 sets a peripheral region of the pixel to be processed. For example, in Figures 4 to 7, a center is a pixel to be processed 41, and a peripheral region 43 with 21 pixels $\times$ 21 pixels within 10 pixels from the pixel to be processed 41 is set. In the example in Figure 7, the peripheral region 43 is set as a regular square, but this is not limiting, and the peripheral region 43 may be set to an arbitrary shape such as a rectangle, not a regular square, a circle, an oval and the like.

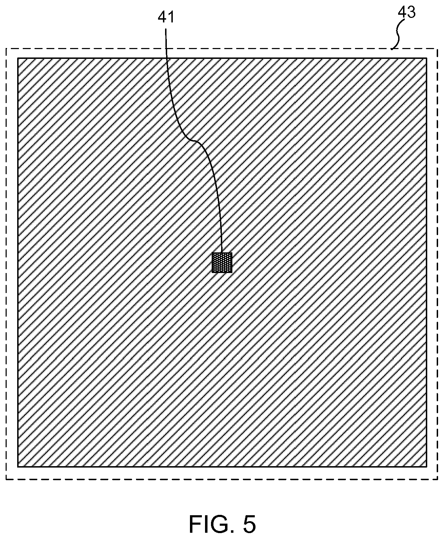

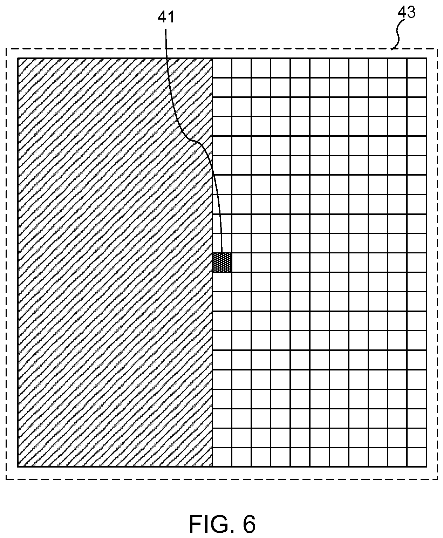

In the example in Figure 4, all the pixels in the peripheral region 43 including the pixel to be processed 41 are bright pixels, while in the example in Figure 5, all the pixels excluding the pixel to be processed 41 in the peripheral region 43 are dark pixels. In the example in Figure 6, all the pixels on the left side of the pixel to be processed 41 in the peripheral region 43 are dark pixels. In the example in Figure 7, a rectangular region on the left of the pixel to be processed 41 has dark pixels. Figure 4 corresponds to a region A in the tomographic image data 30 in Figure 3, Figure 6 to a region B, and Figure 7 to a region C, respectively. Note that the region corresponding to Figure 5 is not present in the example of the tomographic image data 30 in Figure 3.

When an exposure amount is to be adjusted in accordance with the number Pd of the dark pixels present in the periphery of the pixel to be processed 41 as an exposure target, the exposure amount Ia (unit: mJ/mm$^2$) can be calculated by the following equation, for example.

[Formula 1]

$$Ie = Ib \times \left(E_{\max} - 1\right) \times \frac{Pd}{Pa} \quad \cdots (1)$$

[Formula 2]

$$Ia = Ib + Ie \quad \cdots (2)$$

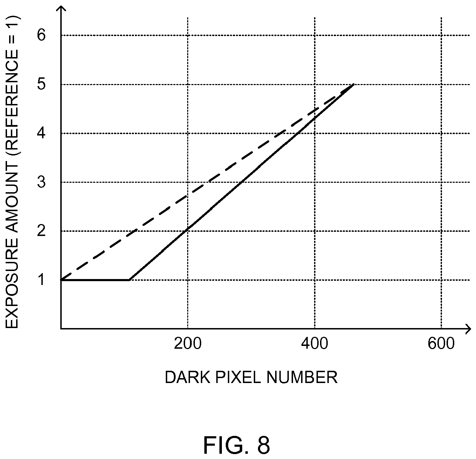

In the equations (1) and (2), Ie is an emphasis exposure amount (unit: mJ/mm$^2$), Ib is a reference light amount (unit: mJ/mm$^2$), $E_{\max}$ is a maximum value (unit: dimensionless) of a ratio of emphasis, Pa is the total number of pixels in the peripheral region 43 (here, 21 $\times$ 21 - 1 = 440) and, Pd is the number of dark pixels. In the equation (1), assuming that Ia = 1 and $E_{\max}$ = 5, a relationship between the number of dark pixels and the exposure amount in the peripheral region 43 when the exposure amount Ia is calculated is as a broken line in Figure 8, for example.

Moreover, a specific example of the print data generated by calculating the pixel value (corresponding to the exposure amount Ia) for each of the pixel to be exposed is illustrated in Figure 9(a) by the equation (1). As illustrated in Figure 9(a), a region to be exposed (corresponding to a region in the fabricated object which is a generation target) has a substantially white profile portion, while an inside region thereof is gray darker than that. This indicates that the exposure amount on the profile portion in the region to be exposed is larger than the inside.

As described above, when fabrication is performed by the photo-fabrication device 200 by using the print data obtained by modulating the exposure amount Ia in accordance with the equations (1) and (2), a sufficient exposure amount is obtained particularly on the profile portion and thus, fabrication is performed to the end. However, the exposure amount Ia on the profile portion of the hole portion 25 which is a fine hole is approximately 1.4 times of the reference value Ib. By means of such excessive exposure, the liquid resin R is cured by the light leaked from the pixels around the hole and as a result, the hole is closed in some cases.

In order to reduce an emphasis degree of the exposure amount so as to prevent such a situation, the exposure amount can be calculated by using the equation (1) after the peripheral region 43 is reduced (Pa = 5 $\times$ 5 - 1 = 24, for example). Figure 9(b) illustrates an example of the print data when the exposure amount is adjusted on the basis of the equations (1) and (2) by setting the peripheral region 43 smaller than that in Figure 9(a). When Figure 9(b) is compared with Figure 9(a), the profile portion and the peripheries of the hole portions 23 and 25 are darker. This means that the exposure amounts on the profile portion and the peripheries of the hole portions 23 and 25 are lower than the case of Figure 9(a). Thus, if the photo-fabrication device 200 performs fabrication by using the print data in Figure 9(b), the hole portion 25 is normally formed. However, since the exposure amount runs short particularly on the profile portion, the resin forming film M is delaminated, and fabrication cannot be completed to the end in some cases.

In order to take the middle of Figure 9(a) and Figure 9(b), the both can be simply added up. Figure 9(c) is such simple addition for each pixel of the print data in Figure 9(a) and Figure 9(b). However, even in the example of Figure 9(c), an influence of Figure 9(a) is large, and the exposure amount in the periphery of the hole portion 25 is strong and thus, the hole portion 25 cannot be formed well.

Therefore, when a fine hole shape is present in the peripheral region 43, an emphasis amount needs to be lowered by lowering the degree of emphasis or by reducing a range of the peripheral region 43 in the periphery of the hole shape.

Thus, the information processing device 100 is configured not to emphasize the exposure amount unless the dark pixel number Pd in the peripheral region 43 is a certain threshold value or more (hereinafter, referred to as an ignore pixel number Pi). More specifically, the exposure amount is calculated by the following equation in accordance with whether the dark pixel number Pd is the ignore pixel number Pi or more or less than the ignore pixel number Pi):

[In the case of Pd ≤ Pi]

[Formula 3]

$$Ie = 0 \quad \cdots (3)$$

[In the case of Pd > Pi]

[Formula 4]

$$Ie = Ib \times \left( E_{\max} - 1 \right) \times \frac{\left( Pd - Pi \right)}{\left( Pa - Pi \right)} \quad \cdots (4)$$

[Formula 5]

$$Ia = Ib + Ie \quad \cdots (5)$$

In the equations (3) to (5), assuming that Ib = 1.0, $E_{\max}$ = 5, and Pi = 100, a relationship between the number of dark pixels and the exposure amount in the peripheral region 43 is as a solid line in Figure 8, for example. When the ignore pixel number Pi = 0 in the equation (4), it matches the equation (1).

Here, in the example in Figure 7, the dark pixel number Pd corresponding to the hole portion 25 is 7 × 7 = 49. Thus, since the dark pixel number Pd (49) < ignore pixel number Pi (100), the equation (3) is applied to the pixel to be processed 41, and the exposure amount Ia is the reference value Ib (equation (5)). However, in this case, since the emphasis is not placed on the peripheral portion of the hole portion 25, the exposure amount runs short and as a result, the profile of the hole portion 25 becomes unclear in some cases.

Thus, by adding the emphasis data generated by using the equations (3) and (4) and the emphasis data generated by using the equations (1) and (2) after the size of the peripheral region 43 is made smaller than the equations (3) and (4), strong emphasis is placed on the profile portion, and weak emphasis is also placed on the peripheral portion of the hole portion 25 which is a fine hole. Here, the exposure amount Ia is calculated by the following equation, assuming that an emphasis light amount in a wide range is Ie0 and an emphasis light amount in a narrow range is Ie1:

[Formula 6]

$$Ia = Ib + Ie0 + Ie1 \quad \cdots (6)$$

Figure 9(d) is a diagram illustrating the print data obtained as the result of the addition. As a result, the hole portion 25 can be formed suitably while separation between layers is prevented.

(2 Functional configuration of information processing device 100)

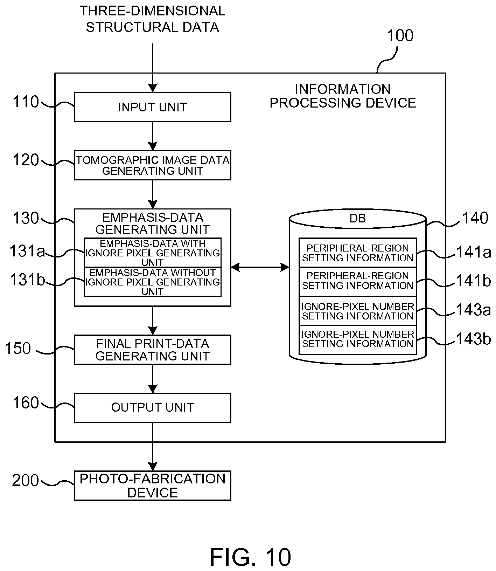

Hereinafter, functional configuration of the information processing device 100 according to this embodiment will be described by referring to Figure 10. Figure 10 is a functional block diagram illustrating a specific example of the functional configuration of the information processing device 100. The information processing device 100 includes an input unit 110, a tomographic image data generating unit 120, an emphasis-data generating unit 130, a database (DB) 140, a final print-data generating unit 150, and an output unit 160. In the example in Figure 1, the information processing device 100 and the photo-fabrication device 200 are illustrated as physically different devices, but this is not limiting, and the photo-fabrication device 200 including the function of the information processing device 100 can be implemented, for example. Alternatively, the function of the information processing device 100 can be realized by being divided into a plurality of information processing devices.

The input unit 110 receives an input of three-dimensional structural data indicating a three-dimensional structure of a fabricated object which is a generation target. The three-dimensional structural data may be generated in another information processing device, for example, and input into the information processing device 100 via a communication interface or data interface, for example, or may be generated by software such as three-dimensional CAD or the like on the information processing device 100. In the latter case, a file of the three-dimensional structural data generated by the three-dimensional CAD or the like is stored on a non-volatile storage medium such as an HDD (Hard Disk Drive) and a flash memory, for example, and thus, the input unit 110 only needs to read the three-dimensional structural data from the storage medium.

The tomographic image data generating unit 120 generates the tomographic image data 30 which is monochromatic binary bitmap from the three-dimensional structural data input from the input unit 110. At this time, the tomographic image data generating unit 120 generates the model 20 from the three-dimensional structural data, for example, and generates the tomographic image data 30 by cutting the model 20 for each thickness of the resin forming film M generated by the photo-fabrication device 200. At this time, the pixel (pixel which needs to be exposed by the photo-fabrication device 200) corresponding to a space within a region constituting the model 20 is set to white (bright pixel) and the pixel (pixel which does not need to be exposed by the photo-fabrication device 200) corresponding to a space within a region not constituting the model 20 to black (dark pixel).

The emphasis-data generating unit 130 generates emphasis data with 8-bit gray-scale from the tomographic image data 30 which is monochromatic binary bitmap generated by the tomographic image data generating unit 120. The emphasis-data generating unit 130 generates the emphasis data by at least two types of methods with different parameters in use. The number of types of the emphasis-data generating units that can be generated by the emphasis-data generating unit 130 may be 3 or more. In this case, the DB 140 can have peripheral-region setting information 141 or ignore-pixel number setting information 143 may be provided in the DB 140.

Here, it is assumed that the two types of emphasis-data generating methods with different parameters in use are executed in an emphasis-data with ignore pixel generating unit 131a and an emphasis-data without ignore pixel generating unit 131b. In generation of the emphasis data, the emphasis-data with ignore pixel generating unit 131a and the emphasis-data without ignore pixel generating unit 131b, peripheral-region setting information 141a and 141b (collectively referred to also as peripheral-region setting information 141) and ignore-pixel number setting information 143a and 143b (collectively referred to also as ignore-pixel number setting information 143) are referred to, respectively. The final print-data generating unit 150 generates the print data for determining the final exposure amount for each pixel on the basis of the emphasis data generated by the emphasis-data with ignore pixel generating unit 131a and the emphasis-data without ignore pixel generating unit 131b, respectively.

The emphasis-data with ignore pixel generating unit 131a and the emphasis-data without ignore pixel generating unit 131b determine emphasis amounts of exposure for each pixel by using the aforementioned equations (3) and (4), respectively. Specifically, the emphasis-data with ignore pixel generating unit 131a calculates an exposure emphasis amount $Ie$ for the pixel to be processed 41 which is an exposure target by using the dark pixel number $Pd$ in the peripheral region 43 determined on the basis of the peripheral-region setting information 141a and the ignore pixel number $Pi$ determined on the basis of the ignore-pixel number setting information 143a. If the peripheral region 43 is determined as a rectangular region having 21 pixels $\times$ 21 pixels around the pixel to be processed 41 by the peripheral-region setting information 141a, and the ignore pixel number $Pi$ is determined to be 100 by the ignore-pixel number setting information 143a as described above, for example, the relationship between the exposure amount $Ia$ obtained by adding the reference value $Ib$ (= 1) to the emphasis amount $Ie$ and the dark pixel number makes a graph indicated by a solid line in Figure 8.

The emphasis-data without ignore pixel generating unit 131b calculates the exposure amount $Ia$ for the pixel to be processed 41 which is an exposure target by using the dark pixel number $Pd$ in the peripheral region 43 determined on the basis of the peripheral-region setting information 141b and the ignore pixel number $Pi$ determined on the basis of the ignore-pixel number setting information 143b. If the peripheral region 43 is determined as a rectangular region having 5 pixels × 5 pixels around the pixel to be processed 41 by the peripheral-region setting information 141b, and the ignore pixel number Pi is determined to be 0 by the ignore-pixel number setting information 143b, for example, the print data obtained by adding the reference value Ib to the emphasis data generated by the emphasis-data without ignore pixel generating unit 131b is as illustrated in Figure 9(b).

Here, an area of the peripheral region 43 determined by the peripheral-region setting information 141a used in the emphasis-data with ignore pixel generating unit 131a is larger than an area of the peripheral region 43 determined by the peripheral-region setting information 141b used in the emphasis-data without ignore pixel generating unit 131b. Moreover, the value of the ignore pixel number Pi determined by the ignore-pixel number setting information 143a used in the emphasis-data with ignore pixel generating unit 131a is larger than the value of the ignore pixel number Pi determined by the emphasis-data without ignore pixel generating unit 131b. Here, the emphasis-data without ignore pixel generating unit 131b is called "without ignore pixel", but the ignore pixel number Pi does not necessarily have to be 0.

As a result, the exposure amount of the emphasis data generated by the emphasis-data with ignore pixel generating unit 131a is emphasized more on the outer-shape profile portion than the emphasis data generated by the emphasis-data without ignore pixel generating unit 131b. On the other hand, in the periphery of a fine hole such as the periphery of the hole portion 25, the exposure amount of the emphasis data generated by the emphasis-data without ignore pixel generating unit 131b is emphasized more than that of the emphasis data generated by the emphasis-data with ignore pixel generating unit 131a.

The final print-data generating unit 150 generates the final 8-bit gray-scale print data whose specific example is illustrated in Figure 9(d) by adding the pixel values of the emphasis data generated by the emphasis-data with ignore pixel generating unit 131a and the emphasis-data without ignore pixel generating unit 131b to the reference exposure amount for each pixel. As a result, the print data with the exposure amount suitably emphasized on the outer-shape profile portion and the peripheral portion of the fine hole can be generated.

Though the emphasis data generated by the emphasis-data with ignore pixel generating unit 131a and the emphasis data generated by the emphasis-data without ignore pixel generating unit 131b are added, here, but this is not limiting. If there is no fine hole or the like, for example, the emphasis data generated by the emphasis-data with ignore pixel generating unit 131a can be singularly delivered to the final print-data generating unit 150.

Alternatively, if three or more types of the emphasis-data generating units 131 are present, the emphasis data generated by them can be combined as appropriate so as to generate the print data or a plurality of types of the print data can be generated by arbitrarily combining two pieces of the emphasis data.

The output unit 160 outputs a signal based on the print data generated by the final print-data generating unit 150 to the photo-fabrication device 200 and the like, for example. When the information processing device 100 directly controls the photo-fabrication device 200, for example, the output unit 160 only needs to output a control signal for causing the exposure amount corresponding to the pixel of the irradiation target to be output on the basis of the pixel value of the print data while sequentially receiving information of an irradiation position (coordinate) of the laser beam L from the photo-fabrication device 200. Alternatively, when the photo-fabrication device 200 itself can output the laser beam L on the basis of the print data, the output unit 160 only needs to output the print data generated by the final print-data generating unit 150 as the gray-scale image data as it is.

(3 Flow of processing)

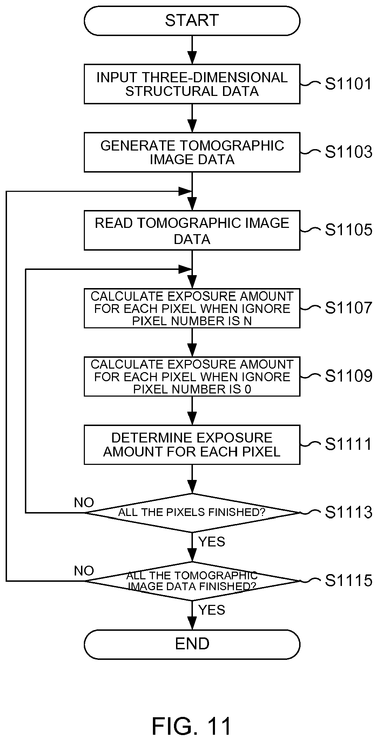

Hereinafter, a flow of processing of the information processing device 100 will be described by referring to Figure 11. Figure 11 is a flowchart illustrating the flow of processing of the information processing device 100 according to this embodiment.

Each of the processing steps which will be described later can be executed by arbitrarily changing the order or in parallel within a range not causing contradiction in the processing contents, and another step may be added between each of the processing steps. Moreover, a step described as one step for convenience can be executed in a plurality of steps, and the steps described in plural for convenience can be also executed as one step.

First, the input unit 110 reads the three-dimensional structural data from another information processing device or the storage medium such as an HDD (S1101). The tomographic image data generating unit 120 generates one or more pieces (usually, a large number) of the tomographic image data 30 obtained by cutting a fabricated object to be generated for each thickness of the resin forming film M generated by the photo-fabrication device 200 on the basis of the input three-dimensional structural data (S1103). The emphasis-data generating unit 130 reads one piece of the tomographic image data from one or more pieces of the tomographic image data 30 (S1105) thus generated and starts processing for each of the pixels.

First, the emphasis image data with ignore pixel generating unit 131a calculates the emphasis amount Ie of the exposure amount of the pixel to be processed 41 which is an exposure target using the peripheral-region setting information 141a and the ignore-pixel number setting information 143a (S1107). In Figure 11, the ignore pixel number Pi set by the ignore-pixel number setting information 143a is assumed to be N.

Moreover, the emphasis-data without ignore pixel generating unit 131b calculates the emphasis amount le of the exposure amount of the pixel to be processed 41 which is an exposure target using the peripheral-region setting information 141b and the ignore-pixel number setting information 143b (S1109). In Figure 11, the ignore pixel number Pi set by the ignore-pixel number setting information 143b is assumed to be 0.

When the calculation of the emphasis amount le of the exposure amount by the emphasis-data with ignore pixel generating unit 131a and the emphasis-data without ignore pixel generating unit 131b is finished, the final print-data generating unit 150 calculates the final exposure amount la by adding the values of the both to the reference exposure amount (S1111).

The processing at S1109 to S1111 is executed for the pixels of all the exposure targets constituting the tomographic image data 30, and when the processing is finished (Yes at S1113), the emphasis-data generating unit 130 determines whether unprocessed tomographic image data 30 remains or not (S1115). If the unprocessed tomographic image data 30 remains (No at S1115), the processing at S1105 to S1113 is repeated for all the tomographic image data 30.

(4 Specific example of hardware configuration)

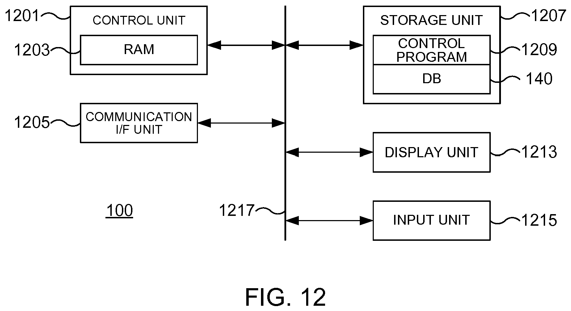

Hereinafter, a specific example of the hardware configuration of the information processing device 100 will be described by referring to Figure 12. As illustrated in Figure 12, the information processing device 100 includes a control unit 1201, a communication interface (I/F) unit 1205, a storage unit 1207, a display unit 1213, and an input unit 1215 and each unit is connected through a bus line 1217.

The control unit 1201 includes a CPU (Central Processing Unit. Not shown), a ROM (Read Only Memory. Not shown), a RAM (Random Access Memory) 1203 and the like. The control unit 1201 is configured to be capable of executing the aforementioned image processing in addition to general computing by executing a control program 1209 stored in the storage unit 1207. For example, the input unit 110, the tomographic image data generating unit 120, the emphasis-data generating unit 130, the final print-data generating unit 150, and the output unit 160 described by referring to Figure 10 can be realized as a control program 1209 running on the CPU after being temporarily stored in the RAM 1203.

Moreover, the RAM 1203 temporarily holds a part of or the whole of the input three-dimensional structural data, the peripheral-region setting information 141a and 141b included in the DB 140, and the ignore-pixel number setting information 143a and 143b in addition to codes included in the control program 1209. Moreover, the RAM 1203 is used also as a work area when the CPU executes various types of processing.

The communication I/F unit 1205 is a device conducting wired or wireless data communication with the other information processing devices which generate the three-dimensional structural data and the photo-fabrication device 200, for example.

The storage unit 1207 is a non-volatile storage medium such as an HDD (Hard Disk Drive) and a flash memory, for example. The storage unit 1207 stores an operating system (OS) for realizing the functions as a general computer, applications, and data (not shown). Moreover, the storage unit 1207 stores the control program 1209. As described above, the input unit 110, the tomographic image data generating unit 120, the emphasis-data generating unit 130, the final print-data generating unit 150, and the output unit 160 illustrated in Figure 10 can be realized by the control program 1209. Moreover, the storage unit 1207 stores the peripheral-region setting information 141a and 141b and the ignore-pixel number setting information 143a and 143b included in the DB 140.

The display unit 1213 is a display device for presenting various types of information such as the generated tomographic image data 30, the print data and the like, for example. Specific examples of the display unit 1213 include a liquid crystal display, an organic EL (Electro-Luminescence) display and the like, for example. The input unit 1215 is a device for receiving an operation input. Specific examples of the input unit 1215 include a keyboard, a mouse, a touch panel and the like.

Note that the information processing device 100 does not necessarily have to include the display unit 1213 and the input unit 1215. Moreover, the display unit 1213 and the input unit 1215 may be connected to the information processing device 100 from the outside through various interfaces such as a USB (Universal Serial Bus), a display port and the like.

(5. Effects according to this embodiment)

Particularly in recent years, need for fabrication of fine structures has increased in order to obtain high functionality in the three-dimensional fabrication, but the exposure amount needs to be adjusted for the profile portion and the inside thereof in order to prevent delamination in the middle of fabrication or closing or unclear profile of the hole when a shape including a fine and complicated structure is exposed. However, manual adjustment of the exposure amount is extremely difficult in the fabrication of the complicated structure. In this point, the information processing device 100 according to this embodiment can automatically calculate a suitable exposure amount for the pixel to be processed 41 which is an exposure target.

(6 Additional remark)

Note that the configuration of the aforementioned embodiment may be combined or have a part of the configuration portions switched. Moreover, the configuration of the present invention is not limited only to the aforementioned embodiment but can be changed in various ways within a range not departing from the gist of the present invention.

Reference Signs List

1:         photo-fabrication system
100:      information processing device
110:      input unit
120:      tomographic image data generating unit
130:      emphasis-data generating unit
140:      database (DB)
150:      final print-data generating unit
160:      output unit
200:      photo-fabrication device
201:      substrate
203:      regulated liquid-level glass
205:      resin nozzle
207:      laser irradiating unit
1201:    control unit
1203:    RAM
1205:    communication interface unit
1207:    storage unit
1209:    control program
1213:    display unit
1215:    input unit
1217:    bus line

**Claims**

1.  An information processing device comprising:

    means for showing a cut section of a three-dimensional fabricated object and for generating a tomographic image having a structure region of the three-dimensional fabricated object as a first pixel value and a non-structure region as a second pixel value;
    means for setting a first peripheral region for a pixel to be processed having the first pixel value in the tomographic image;
    first calculating means for calculating a pixel value so that an exposure amount increases in accordance with the number of the pixels when the number of pixels having the second pixel value in the region to be processed is a first threshold value or more and for calculating a pixel value so that the exposure amount is constant when the number of the pixels is less than the first threshold value; and
    output means for outputting photo-fabrication data generated on the basis of the pixel value calculated for each of the pixels by the first calculating means so that a photo-fabrication device generates the three-dimensional fabricated object.

2.  The information processing device according to claim 1, further comprising:

    means for setting a second peripheral region for a pixel to be processed having the first pixel value in the tomographic image;
    second calculating means for calculating a pixel value so that an exposure amount increases in accordance with the number of the pixels when the number of pixels having the second pixel value in the region to be processed is a second threshold value or more and for calculating a pixel value so that the exposure amount is constant when the number of the pixels is less than the second threshold value; and

means for generating the photo-fabrication data determining the exposure amount for each pixel on the basis of the pixel value calculated by the first calculating means and the pixel value calculated by the second calculating means, wherein

the first peripheral region is wider than the second peripheral region; and

the first threshold value is larger than the second threshold value.

3. The information processing device according to claim 1, further comprising:

means for setting a second peripheral region for a pixel to be processed having the first pixel value in the tomographic image;

second calculating means for calculating a pixel value so that an exposure amount increases in accordance with the number of the pixels having the second pixel value in the region to be processed; and

means for generating the photo-fabrication data determining the exposure amount for each pixel on the basis of the pixel value calculated by the first calculating means and the pixel value calculated by the second calculating means, wherein

the first peripheral region is wider than the second peripheral region.

4. An information processing method of causing an information processing device to execute steps of:

showing a cut section of a three-dimensional fabricated object and generating a tomographic image having a structure region of the three-dimensional fabricated object as a first pixel value and a non-structure region as a second pixel value;

setting a first peripheral region for a pixel to be processed having the first pixel value in the tomographic image;

calculating a pixel value so that an exposure amount increases in accordance with the number of the pixels when the number of pixels having the second pixel value in the region to be processed is a first threshold value or more and calculating a pixel value so that the exposure amount is constant when the number of the pixels is less than the first threshold value; and

outputting photo-fabrication data generated on the basis of the pixel value calculated for each of the pixels so that a photo-fabrication device generates the three-dimensional fabricated object.

5. A program for causing a computer to execute:

processing of showing a cut section of a three-dimensional fabricated object and of generating a tomographic image having a structure region of the three-dimensional fabricated object as a first pixel value and a non-structure region as a second pixel value;

processing of setting a first peripheral region for a pixel to be processed having the first pixel value in the tomographic image;

processing of calculating a pixel value so that an exposure amount increases in accordance with the number of the pixels when the number of pixels having the second pixel value in the region to be processed is a first threshold value or more and for calculating a pixel value so that the exposure amount is constant when the number of the pixels is less than the first threshold value; and

processing of outputting photo-fabrication data generated on the basis of the pixel value calculated for each of the pixels so that a photo-fabrication device generates the three-dimensional fabricated object.

1

SUB-SCAN DIRECTION

VERTICAL
DIRECTION

200

201

R

205

M

203

L

p

207

a

y

x

INFORMATION
PROCESSING
DEVICE

100

FIG. 1

FIG. 2

FIG. 3

FIG. 4

FIG. 5

41 43

FIG. 6

FIG. 7

FIG. 8

FIG. 9

THREE-DIMENSIONAL
STRUCTURAL DATA

100

INFORMATION
PROCESSING DEVICE

110 — INPUT UNIT

120 — TOMOGRAPHIC IMAGE DATA
GENERATING UNIT

130 — EMPHASIS-DATA
GENERATING UNIT

131a — EMPHASIS-DATA WITH
IGNORE PIXEL GENERATING
UNIT

131b — EMPHASIS-DATA WITHOUT
IGNORE PIXEL GENERATING
UNIT

DB — 140

PERIPHERAL-REGION
SETTING INFORMATION — 141a

PERIPHERAL-REGION
SETTING INFORMATION — 141b

IGNORE-PIXEL NUMBER
SETTING INFORMATION — 143a

IGNORE-PIXEL NUMBER
SETTING INFORMATION — 143b

150 — FINAL PRINT-DATA
GENERATING UNIT

160 — OUTPUT UNIT

200 — PHOTO-FABRICATION
DEVICE

FIG. 10

```
                    ┌─────────────────────┐
                    │        START        │
                    └──────────┬──────────┘
                               │
                    ┌──────────▼──────────┐
                    │ INPUT THREE-DIMENSIONAL │  S1101
                    │   STRUCTURAL DATA    │
                    └──────────┬──────────┘
                               │
                    ┌──────────▼──────────┐
                    │  GENERATE TOMOGRAPHIC │  S1103
                    │     IMAGE DATA       │
                    └──────────┬──────────┘
                               │
                    ┌──────────▼──────────┐
                    │ READ TOMOGRAPHIC IMAGE │  S1105
                    │        DATA          │
                    └──────────┬──────────┘
                               │
                    ┌──────────▼──────────┐
                    │ CALCULATE EXPOSURE AMOUNT │  S1107
                    │ FOR EACH PIXEL WHEN IGNORE │
                    │   PIXEL NUMBER IS N  │
                    └──────────┬──────────┘
                               │
                    ┌──────────▼──────────┐
                    │ CALCULATE EXPOSURE AMOUNT │  S1109
                    │ FOR EACH PIXEL WHEN IGNORE │
                    │   PIXEL NUMBER IS 0  │
                    └──────────┬──────────┘
                               │
                    ┌──────────▼──────────┐
                    │ DETERMINE EXPOSURE   │  S1111
                    │ AMOUNT FOR EACH PIXEL │
                    └──────────┬──────────┘
                               │
             NO          ◇─────▼─────◇
         ┌─────────────── ALL THE PIXELS FINISHED? ───  S1113
         │               ◇───────────◇
         │                    │ YES
         │             ◇──────▼──────◇
         │      NO      ALL THE TOMOGRAPHIC
         └───────────── IMAGE DATA FINISHED? ───  S1115
                       ◇─────────────◇
                            │ YES
                    ┌───────▼────────┐
                    │      END       │
                    └────────────────┘
```

FIG. 11

1201 — CONTROL UNIT

1203 — RAM

1205 — COMMUNICATION I/F UNIT

1207 — STORAGE UNIT

CONTROL PROGRAM — 1209

DB — 140

DISPLAY UNIT — 1213

100

1217

INPUT UNIT — 1215

FIG. 12

**INTERNATIONAL SEARCH REPORT**

| International application No. |
| --- |
| PCT/JP2017/034744 |

**A. CLASSIFICATION OF SUBJECT MATTER**
Int.Cl. B29C64/386(2017.01)i, B33Y50/00(2015.01)i

According to International Patent Classification (IPC) or to both national classification and IPC

**B. FIELDS SEARCHED**

Minimum documentation searched (classification system followed by classification symbols)
Int.Cl. B29C64/386, B33Y50/00

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2017 |
| Registered utility model specifications of Japan | 1996-2017 |
| Published registered utility model applications of Japan | 1994-2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2000-272016 A (3D SYSTEMS, INC.) 03 October 2000, paragraphs [0004], [0011]-[0012] & US 6406658 B1 page 16, column 7, column 17-20 | 1-5 |
| A | JP 10-128854 A (MITSUI CHEMICALS, INC.) 19 May 1998, entire text, all drawings (Family: none) | 1-5 |

☐ Further documents are listed in the continuation of Box C. ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 21 November 2017 (21.11.2017) | 28 November 2017 (28.11.2017) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**EP 3 517 275 A1**

## REFERENCES CITED IN THE DESCRIPTION

### Patent documents cited in the description

* JP 2016117273 A